(19) **Europäisches Patentamt**

**European Patent Office**

**Office européen des brevets**

(11) Publication number: **0 089 108**
**B1**

(12) # EUROPEAN PATENT SPECIFICATION

(45) Date of publication of patent specification: **01.10.86**

(51) Int. Cl.⁴: **F 01 D 25/12**

(21) Application number: **83300509.3**

(22) Date of filing: **01.02.83**

(54) Heat shield apparatus for a gas turbine.

(30) Priority: **17.03.82 US 345355**

(43) Date of publication of application:
**21.09.83 Bulletin 83/38**

(45) Publication of the grant of the patent:
**01.10.86 Bulletin 86/40**

(84) Designated Contracting States:
**DE FR GB**

(56) References cited:
**DE-A-1 960 693**
**FR-A-2 198 054**
**US-A-2 646 210**
**US-A-2 822 974**

**JOURNAL OF AIRCRAFT, vol. 7, no. 4,
July/August 1970, pages 348-354, New York
(USA); U. OKAPUU et al: "Cooled radial turbine
for high power-to-weight applications".**

(73) Proprietor: **A/S Kongsberg Vapenfabrikk
Kirkegardsveien
N-3600 Kongsberg (NO)**

(72) Inventor: **Austrem, Ivar
Bjorkeveien 19
N-3300 Hokksund (NO)**

(74) Representative: **Jackson, David Spence et al
REDDIE & GROSE 16, Theobalds Road
London, WC1X 8PL (GB)**

## Description

This invention relates to heat shield apparatus for a radial inflow gas turbine, the turbine having a plurality of blades mounted on a hub for rotation about an axis, the combustion gases entering the turbine at an inlet essentially in the radial direction and leaving at an outlet essentially in the axial direction, the apparatus comprising:

a) a first shield member in the form of an annular plate positioned concentric with the hub axis and immediately adjacent the turbine inlet;

b) a second shield member in the form of an annular plate positioned concentric with the hub axis, the second shield member being essentially co-planar with the first shield member and being positioned adjacent to both the first shield member and the hub, the first and second shield members having respective shielding surfaces facing the combustion gas and the turbine outlet and defining, in part, the combustion gas flow path past the turbine blades;

c) means for supporting the first and second shield members; and

d) means cooperating with the supporting means for cooling the first and second shield members; wherein

the support means includes an annular plate member positioned concentric with the hub axis and adjacent the first and second shield members, at least some portions of the support plate being spaced from the first shield member and the cooling means includes

(i) a source of pressurized gas at a low temperature, relative to the combustion gas temperature, and

(ii) means for channeling the pressurized low temperature gas into the space between the first shield member and the support plate for cooling the surface of the first shield member opposite the first shield member shielding surface.

In some extremely compact modern designs of gas turbine engine, temperature-sensitive components such as turbine rotor bearings may be placed close to the turbine section. For protection, a heat shield must be positioned between the hot combustion gases and the critical components. Also, in a high performance gas turbine, the heat shield must maintain proper clearance between itself and the turbine impeller.

The heat shield in a high performance gas turbine is subjected to extreme thermal conditions, and cannot survive without efficient cooling. Common practice has been to segment the heat shield and thus reduce the stresses resulting from temperature gradients. However, a segmented heat shield is difficult to cool due to the multiple leak paths between the segments.

In an article entitled "Cooled Radial Turbine for High Power-to-Weight Applications" by Ulo Okapuu and Glenn S. Calvert, at pages 348 to 354 of the Journal of Aircraft, July/August 1970, Volume 7, No. 4, a radial turbine is described in which the nozzle section is cooled by two separate streams of cooling air, which, after having cooled the backplate and shroud for the rotor, respectively, converge in the nozzle vanes and are ejected into the primary gas stream ahead of the rotor. The backplate cooling air is progressively admitted into a space formed between the backplate and an air cover and passes through a number of channels machined into the surface of the upper part of the backplate, then through holes in a nozzle support cylinder and finally into the nozzle insert. Thus only the face of the backplate remote from the primary gas stream is cooled directly by the cooling air.

It is especially important to retard the flow of heat radially inwards towards bearings and shaft support for the rotor hub. In the turbine described in the above mentioned article, the backplate assembly, consisting of a lower backplate, upper backplate, and air cover, is bolted to the bearing housing. The portion of the combustion flow path boundary defined by the exposed faces of the upper and lower backplates is exposed to especially severe conditions as it is close to the nozzle section where the highest combustion gas temperatures are encountered.

It is accordingly an object of the invention to provide heat shield apparatus for partly defining the gas flow path and for shielding bearings and other temperature sensitive components in gas turbines from the high temperatures of the combustion gases.

According to the present invention, heat shield apparatus as defined hereinbefore is characterised in that a radially inner edge of the first shield member and an adjacent radially outer edge of the second shield member from an intershield gap through which the pressurised low temperature gas flows, the coolant gas which has flowed through the intershield gap serving to film-cool the shielding surface of the second shield member.

It is preferred that a radially outer edge of the first shield member be sealingly contacted by the annular plate member around the periphery of the first shield member, and that the cooling means provide a first shield member temperature distribution decreasing in the radially inward direction for thermally warping the radially outer edge against the support means to augment the sealing contact force. The heat shield is of annular construction to reduce the number of leak paths and thus reduce the required cooling air flow, while maintaining low temperature gradients and good clearance control.

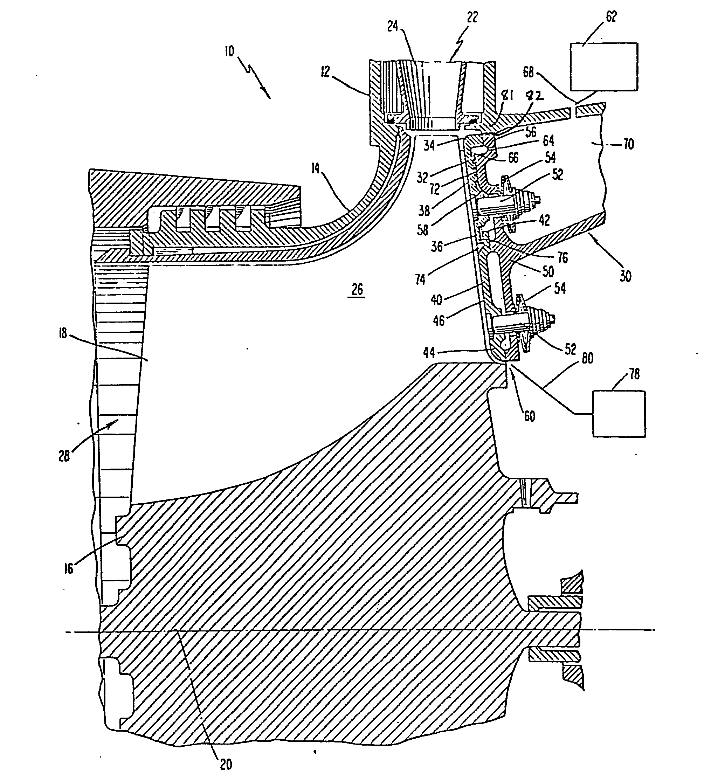

The invention will now be described by way of example with reference to the accompanying drawing. The sole figure is a schematic cross-sectional representation of a gas turbine having a heat shield made in accordance with the present invention.

The figure shows a portion of a gas turbine 10 including turbine housing 12 having a shroud portion 14, a turbine rotor hub 16, and a plurality of turbine blades 18 mounted on the hub 16 for rotation about a turbine axis 20.

The gas turbine 10 is of the radial-inflow axial-outflow type. That is, hot combustion gases are fed from a combustor (not shown) through a turbine inlet 22 essentially in the radial direction, although the present invention also encompasses mixed axial and radial inflow configurations. Thereafter, the hot gases flow past inlet guide vanes 24 into the region 26 swept by the rotating blades 18 where they are expanded against the blades 18 to produce power. The expanded gases leave the turbine at an outlet 28, essentially in the axial direction. Thus, the combustion gas flow path through the turbine is defined in part by the housing 12, including the shroud 14, and the surface of the hub 16 and in part by heat shield apparatus 30 to be discussed herein. At the inlet 22 the gas total temperature may be as high as 1200°C and the static pressure approximately 4 bars. As the combustion gases expand through the turbine region the temperature and pressure can fall to about 600°C and 1 bar at the turbine outlet 28.

The bearings and shaft support (not shown) for the turbine hub 16 would lie to the right of the components pictured in the figure, along the axis 20. Thus, it is important to retard the flow of heat in that direction. Moreover, the portion of the combustion flow path boundary occupied by the heat shield apparatus 30 is exposed to especially severe conditions as it is proximate the inlet 22 where the highest combustion gas temperatures are encountered and because it is removed from the housing portions where external cooling would be available from the ambient.

In accordance with the invention, there is provided a first shield member in the form of an annular plate positioned concentric with the hub axis and immediately adjacent the turbine inlet. As embodied herein, this first shield member 32 is positioned concentric with hub axis 20 in a plane essentially perpendicular to the axis 20. The shield member 32 has a radially outer edge 34, which is positioned adjacent the inlet 22, and a radially inner edge 36. The orientation of the shield member 32 shown in the figure is such that its shielding surface 38 faces generally in the axial direction, that is, toward the turbine outlet 28.

Further in accordance with the present invention, a second annular plate-shaped shield member is provided positioned co-planar with the first shield member. As embodied herein, this second shield member 40 has a radially outer edge 42, a radially inner edge 44 positioned proximate to the hub 16, and a shielding surface 46 for facing the combustion gases in the region 26. The second shield member 40 also is concentric with the hub axis 20 and is essentially co-planar with the first shield member 32. Together, the shielding surfaces 38 and 46 define the remainder of the combustion gas flow path through the region 26.

Still further in accordance with the present invention, means are provided for supporting the first and second shield members. As embodied herein, the support means includes an annular support plate 50 operatively connected to the engine main structure and positioned parallel to the first and second shield members 32 and 40. The shield members 32 and 40 are attached to the support plate 50 by bolt and nut assemblies 52. Plate spring washers 54 are included in the bolt and nut assembly 52 for the first shield member 32 to allow for thermal flexing of that shield during high temperature operation, for reasons that will be explained hereinafter. Plate spring washers 54 are also shown in use with the bolt and nut assembly 52 for the second shield member 40.

The first shield member 32 is spaced from the support plate 50 in part by its radially outer edge 34 being configured to abut and seal against an outer peripheral edge 56 of the support plate 50. A passage 58 of controlled thickness dimension is thus created between the support plate 50 and the first shield member 32. The second shield member 40 is supported by the plate 50 in such a way that its radially inner shield edge 44 is spaced from the surface of the hub 16 to form a gap 60 of controlled dimension.

Still further in accordance with the present invention, means cooperating with the support means are provided for cooling the first and second shield members. As embodied herein, a source 62 of high pressure relatively cool gas (air), compared with the combustion gases, is provided to supply coolant gas to a series of orifices 64 formed in the outer edge 56 of the support plate 50. The axes of these orifices 64 are such that the coolant gases flowing through the orifices 64 impinge on the portion of surface 66 opposite the highest temperature portion of the shielding surface 36 of the first shield member 32. Separate ducting can be provided for connecting the coolant source 62 with the orifices 64 or the housing 12 can be configured to carry the coolant gas. In the figure, ducting including feeding holes 68 supplies coolant gas from the source 62 at about 370°C and 9 bars to a housing cavity 70, maintained at approximately 4 bars, from which the orifices 64 are fed. By carefully sizing the feeding holes 68 relative to the impingement holes 64 it is possible to ensure that a finite amount of cooling air flows through the gap 82 between the heat shield support edge 56 and the inlet nozzle guide vane support 81 and film cools the outer edge 34 of the first shield member 32.

After impingement, the coolant gas flows radially inward along the passage 58, cooling the surface 66 and thus the surface 38 by conduction through the first shield member 32. In the figure, pedestals or turbulators in the form of protrusions 72 are formed in the surface 66 to increase turbulence in the coolant gas and thus augment heat transfer. The size, location and number of protrusions 72 are selected in accordance with the flow rate of the coolant gas from the source 62 in the passage 58 to provide a desired heat transfer coefficient. By approximately sizing the dimensions of the passage 58 and the orifices 64, the rate of coolant flow in the passage 58 is controlled in accordance with coolant gas and combustion gas temperatures to provide a temperature distribution in the first shield member 32 decreasing in the radially inward direction. The tendency of an annular plate member to distort or "warp" with such a temperature profile is used to advantage in the present invention, in that the warping will cause an increase in the sealing contact force between the edges 34 and 56 caused by the controlled flexing of the first shield member 32 against the spring washers 54. In this manner, the integrity of the coolant passage 58 is maintained during high temperature operation, and unwanted leakage paths for the coolant gas such as between shield edge 34 and support plate edge 56 are precluded.

The inner edge 36 of the first shield member 32 and the outer edge 42 of the second shield member 40 overlap to form an intershield gap 74. A series of channels 76 formed in the overlapped portion of the edge 36 allows coolant gas to flow from the passage 58 to gap 74 and then out along the shielding surface 46 of the second shield member 40 to provide film cooling of the surface 46.

The cooling means includes a second source 78 of pressurized coolant gas and associated ducting 80, for supplying coolant gas to the gap 60. In the present embodiment, the source 78 is the compressor from which air at approximately 120°C and 2 bars is available. The ducting 80 can be separate or integral with the housing 12, or any combinations of coolant gas channeling means can be used. The source 78 could be combined with the source 62 in a single source, but it may be advantageous, as depicted in the figure, to have separate coolant gas sources.

**Claims**

1. Heat shield apparatus for a radial inflow gas turbine (10), the turbine (10) having a plurality of blades (18) mounted on a hub (16) for rotation about an axis (20), the combustion gases entering the turbine (10) at an inlet (22) essentially in the radial direction and leaving at an outlet (28) essentially in the axial direction, the apparatus comprising:

a) a first shield member (32) in the form of an annular plate positioned concentric with the hub axis (20) and immediately adjacent the turbine inlet (22);

b) a second shield member (40) in the form of an annular plate positioned concentric with the hub axis (20), the second shield member (40) being essentially co-planar with the first shield member (32) and being positioned adjacent to both the first shield member (32) and the hub (16), the first and second shield members (32, 40) having respective shielding surfaces (38, 46) facing the combustion gas and the turbine outlet (28) and defining, in part, the combustion gas flow path past the turbine blades (18);

c) means (50) for supporting the first and second shield members (32, 40); and

d) means (62) cooperating with the supporting means (50) for cooling the first and second shield members (32, 40); wherein

the support means (50) includes an annular plate member positioned concentric with the hub axis (20) and adjacent the first and second shield members (32, 40), at least some portions of the support plate (50) being spaced from the first shield member (32) and the cooling means includes

(i) a source (62) of pressurized gas at a low temperature, relative to the combustion gas temperature, and

(ii) means (68, 64) for channeling the pressurized low temperature gas into the space between the first shield member (32) and the support plate (50) for cooling the surface (66) of the first shield member (32) opposite the first shield member shielding surface (38), characterised in that a radially inner edge (36) of the first shield member (32) and an adjacent radially outer edge (42) of the second shield member (40) form an intershield gap (74) through which the pressurized low temperature gas flows, the coolant gas which has flowed through the intershield gap (74) serving to film-cool the shielding surface (46) of the second shield member (40).

2. Heat shield apparatus according to claim 1, characterised in that means (72) are provided in the space (58) between the first shield member (32) and said support plate (50) for augmenting heat transfer from the said opposite surface (66).

3. Heat shield apparatus according to claim 2, characterised in that the heat transfer augmenting means includes a plurality of protrusions (72) formed on the said opposite surface (66), the size, location, and number of protrusions (72) being selected in accordance with the flow rate of the coolant gas in the said coolant space (58) to provide a desired heat transfer coefficient.

4. Heat shield apparatus according to claim 1, characterised in that a radially inner edge (44) of the second shield member (40) is spaced from and forms a gap (60) with the surface of the rotating hub (16) the apparatus further including

(i) a second source (78) of pressurized coolant gas at a low temperature, relative to the combustion gas temperature, and

(ii) means (80) for channeling the second coolant gas through the said hub gap (60), past the said edge (44) of the second shield member (40) and into the combustion gas flow path for providing film cooling of the second shield member edge (44).

5. Heat shield apparatus according to claim 1, characterised in that a radially outer edge (34) of the first shield member (32) is sealingly contacted in the axial direction by the support means (50) around the periphery of the first shield member (32), and in that the cooling means provides a first shield member temperature distribution decreasing in the radially inward direction for thermally warping the radially outer edge (34) against the support means (50) to augment the sealing contact force.

6. Heat shield apparatus according to claim 1, characterised in that the radially inner edge (36) of the first plate member (32) overlaps the radially outer edge (42) of the second plate member (40); and in that the flow path of the coolant gas through the gap (74) includes channels (76) formed between the overlapped portions of the first and said second shield members (32, 40).

7. Heat shield apparatus according to claim 1, characterised in that the first said coolant gas channeling means includes a plurality of holes (64) positioned in the radially outer edge (56) of the support plate (50) for directing jets of the coolant gas against the portion of the first shield member (32) adjacent the turbine inlet (22).

8. Heat shield apparatus according to claim 5, characterised in that means (52, 54) are provided for flexibly attaching the first shield member (32) to the support means (50).

9. Heat shield apparatus according to claim 1, characterised in that the turbine inlet (22) is defined in part by a turbine inlet nozzle support member (81); in that the first annular shield member (32) is sized and positioned to have the radially outer edge form a gap (82) with the turbine inlet nozzle support member (81); and in that the first said pressurized gas source (62) also provides gas flow through the nozzle support gap (82), past the outer edge (34) of the first shield member (32), and into the combustion gas flow path for film cooling the said outer edge (34) of the first shield member (32).

10. Heat shield apparatus according to claim 1, characterised in that the flow path between the shield members (32, 40) communicates with the said space between the first shield member (32) and the support plate (50).

**Patentansprüche**

1. Wärmeschild für eine Gasturbine (10) mit Radialeinlaß, wobei die Turbine (10) eine Vielzahl von Schaufeln (18) aufweist, die auf einer Nabe (16) zur Drehung um eine Achse (20) montiert sind, wobei die Verbrennungsgase in die Turbine (10) an einem Einlaß (22) im wesentlichen in radialer Richtung eintreten und sie an einem Auslaß (28) im wesentlichen in axialer Richtung verlassen, wobei die Anordnung folgendes umfaßt:

a) ein erstes Schirmteil (32) in der Form einer ringförmigen Platte, die konzentrisch mit der Nabenachse (20) und unmittelbar benachbart dem Turbineneinlaß (22) angeordnet ist;

b) ein zweites Schirmteil (40) in Form einer ringförmigen Platte, die konzentrisch zur Nabenachse (20) angeordnet ist, wobei das zweite Schirmteil (40) im wesentlichen koplanar mit dem ersten Schirmteil (32) angeordnet ist und an das erste Schirmteil (32) und die Nabe (16) angrenzend positioniert ist, wobei die ersten und zweiten Schirmteile (32, 40) entsprechende Schirmflächen (38, 46) haben, die dem Verbrennungsgas und dem Turbinenauslaß (28) gegenüber liegen und teilweise den Verbrennungsgas-Strömungsweg vorbei an den Turbinenschaufeln (18) bilden;

c) eine Einrichtung (50) zum Tragen der ersten und zweiten Schirmteile (32, 40); und

d) eine Einrichtung (62), die mit der Trageinrichtung (50) zusammenwirkt, um die ersten und zweiten Schirmteile (32, 40) zu kühlen; wobei die Trageinrichtung (50) ein ringförmiges Plattenteil aufweist, das konzentrisch zur Nabenachse (20) und an die ersten und zweiten Schirmteile (32, 40) angrenzend angeordnet ist, wobei zumindest einige Bereiche der Tragplatte (50) von dem ersten Schirmteil (32) beabstandet sind, und wobei die Kühleinrichtung

(i) eine Quelle (62) für Druckgas bei niedriger Temperatur relativ zur Verbrennungsgastemperatur und

(ii) eine Einrichtung (68, 64) zur Kanalisierung des Druckgases niedriger Temperatur in dem Raum zwischen den ersten Schirmteil (32) und der Tragplatte (50) aufweist, um die Oberfläche (66) des ersten Schirmteiles (32) zu kühlen, die der Schirmfläche (38) des ersten Schirmteiles gegenüber liegt,

dadurch gekennzeichnet, daß eine radial innere Kante (36) des ersten Schirmteiles (32) und eine benachbarte, radial äußere Kante (42) des zweiten Schirmteiles (40) einen Spalt (74) zwischen den Schirmen bilden, durch den Druckgas niedriger Temperatur strömt, wobei das Kühlgas, welches den Spalt (74) zwischen den Schirmen durchströmt hat, zur Schleier- oder Filmkühlung der Schirmfläche (46) des zweiten Schirmteiles (40) dient.

2. Wärmeschild nach Anspruch 1, dadurch gekennzeichnet, daß Einrichtungen (72) in dem Raum (58) zwischen dem ersten Schirmteil (32) und der Tragplatte (50) vorgesehen sind, um die Wärmeübertragung von der gegenüberliegenden Oberfläche (66) zu vergrößern.

3. Wärmeschild nach Anspruch 2, dadurch gekennzeichnet, daß die Einrichtungen zur Erhöhung der Wärmeübertragung eine Vielzahl von Vorsprüngen (72) aufweisen, die an der gegenüberliegenden Oberfläche (66) ausgebildet sind, wobei die Größe, die Anordnung und die Anzahl der Vorsprünge (72) in Abhängigkeit vom Strömungsdurchsatz des Kühlgases in dem Kühlraum (58) gewählt sind, um einen gewünschten Wärmeübertragungskoeffizienten zu erzielen.

4. Wärmeschild nach Anspruch 1, dadurch gekennzeichnet, daß eine radial innere Kante (44) des zweiten Schirmteiles (40) im Abstand von der Oberfläche der rotierenden Nabe (16) angeordnet ist und einen Spalt (60) mit dieser bildet, wobei die Anordnung weiterhin umfaßt:

(i) eine zweite Quelle (78) für unter Druck stehendes Kühlgas mit niedriger Temperatur relativ zur Verbrennungsgastemperatur und

(ii) eine Einrichtung (80) zur Kanalisierung des zweiten Kühlgases durch den Nabenspalt (60), vorbei an der Kante (44) des zweiten Schirmteiles (40) und in den Verbrennungsgas-Strömungsweg zur Bildung der Schleier- oder Filmkühlung der Kante (44) des zweiten Schirmteiles.

5. Wärmeschild nach Anspruch 1, dadurch gekennzeichnet, daß eine radial äußere Kante (34) des ersten Schirmteiles (32) in axialer Richtung in abdichtendem Kontakt mit der Trageinrichtung (50) um den Umfang des ersten Schirmteiles (32) steht, und daß die Kühleinrichtung für eine Temperaturverteilung des ersten Schirmteiles sorgt, die in radialer Richtung nach innen abnimmt, um die radial äußere Kante (34) gegen die Trageinrichtung (50) thermisch zu verziehen, um die abdichtende Kontaktkraft zu vergrößern.

6. Wärmeschild nach Anspruch 1, dadurch gekennzeichnet, daß die radial innere Kante (36) des ersten Plattenteiles (32) die radial äußere Kante (42) des zweiten Plattenteiles (40) überlappt, und daß der Strömungsweg des Kühlgases durch den Spalt (74) Kanäle (76) umfaßt, welche zwischen den überlappenden Bereichen der ersten und zweiten Schirmteile (32, 40) ausgebildet sind.

7. Wärmeschild nach Anspruch 1, dadurch gekennzeichnet, daß die ersten Kühlgas-Kanalisierungseinrichtungen eine Vielzahl von Löchern (64) aufweisen, die in der radial äußeren Kante (56) der Tragplatte (50) angeordnet sind, um Strahlen des Kühlgases gegen den Bereich des ersten Schirmteiles (32) in der Nähe des Turbineneinlasses (22) zu richten.

8. Wärmeschild nach Anspruch 5, dadurch gekennzeichnet, daß Einrichtungen (52, 54) vorgesehen sind, um das erste Schirmteil (32) elastisch an der Trageinrichtung (50) anzubringen.

9. Wärmeschild nach Anspruch 1, dadurch gekennzeichnet, daß der Turbineneinlaß (22) teilweise von einem Turbineneinlaß-Düsentragteil (81) gebildet wird; daß das erste ringförmige Schirmteil (32) größenmäßig und positionsmäßig so angeordnet ist, daß seine radial äußere Kante einen Spalt (82) mit dem Turbineneinlaß-Dusentragteil (81) bildet; und daß die erste Druckgasquelle (62) außerdem eine Gasströmung durch den Düsenträgerspalt (82), vorbei an der äußeren Kante (34) des ersten Schirmteiles (32) und in den Verbrennungsgas-Strömungsweg zur Film- oder Schleierkühlung der äußeren Kante (34) des ersten Schirmteiles (32) bildet.

10. Wärmeschild nach Anspruch 1, dadurch gekennzeichnet, daß der Strömungsweg zwischen den Schirmteilen (32, 40) mit dem Raum zwischen dem ersten Schirmteil (32) und der Tragplatte (50) in Verbindung steht.

**Revendications**

1. Bouclier thermique pour une turbine à gaz (10) à entrée radiale d'écoulement, la turbine (10) comportant une pluralité d'aubes montées sur un moyeu (16) pour tourner autour d'un axe (20), les gaz de combustion pénétrant dans la turbine (10) par une entrée (22) sensiblement dans la direction radiale et sortant par une sortie (28) sensiblement dans la direction axiale, le bouclier thermique comprenant:

a) un premier élément protecteur (32) sous la forme d'une plaque annulaire disposée concentriquement à l'axe de moyeu (20) et immédiatement adjacente à l'entrée de turbine (22);

b) un second élément protecteur (40) sous la forme d'une plaque annulaire disposée concentriquement à l'axe de moyeu (20), le second élément protecteur (40) étant sensiblement coplanaire avec le premier élément protecteur (32) et étant placé dans une position adjacente à la fois au premier élément protecteur (32) et au moyeu (16), les premier et second éléments protecteurs (32, 40) comportant des surfaces protectrices respectives (38, 46) dirigées vers les gaz de combustion et la sortie de turbine (28) et définissant, en partie, le trajet d'écoulement des gaz de combustion au delà des aubes de turbine (18);

c) des moyens (50) pour supporter les premier et second éléments protecteurs (32, 40); et

d) des moyens (62) coopérant avec les moyens de support (50) pour refroidir les premier et second éléments protecteurs (32, 40);

bouclier dans lequel les moyens de support (50) comprennent une plaque annulaire disposée concentriquement à l'axe de moyeu (20) et adjacente aux premier et second éléments protecteurs (32, 40), au moins certaines parties de la plaque de support (50) étant espacées du premier élément protecteur (32), et les moyens de refroidissement comprennent:

(i) une source (62) de gaz sous pression à basse température, par rapport à la température des gaz de combustion, et

(ii) des moyens (68, 64) pour canaliser le gaz sous pression à basse température jusque dans l'espace situé entre le premier élément protecteur (32) et la plaque de support (50) pour refroidir la surface (66) du premier élément protecteur (32), qui est opposée à la surface de protection (38) du premier élément protecteur, caractérisé en ce qu'un bord radialement intérieur (36) du premier élément protecteur (32) et un bord adjacent et radialement extérieur (42) du second élément protecteur (40) forment entre les éléments protecteurs un intervalle (74) dans lequel s'écoule le gaz sous pression à basse température, le gaz de refroidissement qui a passé dans ledit intervalle entre éléments protecteurs (74) servant à refroidir par film la surface protectrice (46) du second élément protecteur.

2. Bouclier thermique selon la revendication 1, caractérisé en ce que des moyens (72) sont disposés dans l'espace (58) entre le premier élément protecteur (32) et ladite plaque de support (50) pour augmenter la transmission de chaleur à partir de ladite surface opposée (66).

3. Bouclier thermique selon la revendication 2, caractérisé en ce que les moyens d'augmentation de transmission de chaleur comprennent une pluralité de saillies (72) formées sur ladite surface opposées (66), les dimensions, les positions et le nombre de saillies (72) étant sélectionnés en concordance avec le débit du gaz de refroidissement dans ledit espace de refroidissement (38) pour établir un coefficient de transmission de chaleur désiré.

4. Bouclier thermique selon la revendication 1, caractérisé en ce qu'un bord radialement intérieur (44) du second élément protecteur (40) est espacé de la surface du moyeu tournant (16) et forme un intervalle (60) avec celle-ci, le bouclier comprenant en outre:

(i) une seconde source (78) de gaz de refroidissement sous pression à basse température, par rapport à la température des gaz de combustion, et

(ii) des moyens (80) pour canaliser le second gaz de refroidissement au travers dudit intervalle de moyeu (60), au-delà dudit bord (44) dudit second élément protecteur (40) et jusque dans le trajet d'écoulement des gaz de combustion pour assurer un refroidissement par film du bord (44) du second élément protecteur.

5. Bouclier thermique selon la revendication 1, caractérisé en ce qu'un bord radialement extérieur (34) du premier élément protecteur (32) est en contact étanche, dans la direction axiale, avec le moyen de support (50) autour de la périphérie du premier élément protecteur (32), et en ce que le moyen de refroidissement établit dans le premier élément protecteur une distribution de température décroissant dans la direction orientée radialement vers l'intérieur pour déformer thermiquement le bord radialement extérieur (34) contre le moyen de support (50) afin d'augmenter la force de contact d'étanchéité.

6. Bouclier thermique selon la revendication 1, caractérisé en ce que le bord radialement intérieur (36) de la première plaque (32) recouvre le bord radialement extérieur (42) de la seconde plaque (40); et en ce que le trajet d'écoulement du gaz de refroidissement dans l'intervalle (74) comprend des canaux (76) formés entre les parties en recouvrement des premier et second éléments protecteurs (32, 40).

7. Bouclier thermique selon la revendication 1, caractérisé en ce que le premier moyen de canalisation de gaz de refroidissement comprend une pluralité de trous (64) positionnés dans le bord radialement extérieur (56) de la plaque de support (50) pour diriger des jets de gaz de refroidissement sur la partie du premier élément protecteur (32) adjacente à l'entrée de turbine (22).

8. Bouclier thermique selon la revendication 5, caractérisé en ce qu'il est prévu des moyens (52, 54) pour fixer de façon souple le premier élément protecteur (32) sur le moyen de support (50).

9. Bouclier thermique selon la revendication 1, caractérisé en ce que l'entrée de turbine (22) est définie en partie par un élément de support (81) de buse d'entrée de turbine; en ce que le premier élément protecteur annulaire (32) est dimensionné et positionné de façon que le bord radialement extérieur forme un intervalle (82) avec l'élément de support (81) de buse d'entrée de turbine; et en ce que la première source de gaz sous pression (62) fait également passer du gaz dans l'intervalle de support de buse (82) au-delà du bord extérieur (34) du premier élément protecteur (32) et jusque dans le trajet d'écoulement de gaz de combustion pour refroidir par film ledit bord extérieur (34) du premier élément protecteur (32).

10. Bouclier thermique selon la revendication 1, caractérisé en ce que le trajet d'écoulement entre les éléments protecteurs (32, 40) communique avec ledit espace entre le premier élément protecteur (32) et la plaque de support (50).